# EUROPEAN PATENT APPLICATION

(11) **EP 4 725 879 A1**
(43) Date of publication of application: **15.04.2026**
(21) Application number: 25207149.3
(22) Date of filing: 07.10.2025
(51) Int. Cl.: B65H 19/22, B21C 47/04, B65H 19/29, H01M 10/04

(54) **APPARATUS FOR THE PRODUCTION OF INNER ASSEMBLIES, METHOD FOR THE PRODUCTION OF INNER ASSEMBLIES AND METHOD FOR THE PRODUCTION OF INNER ASSEMBLIES FOR ELECTROCHEMICAL CELLS DESTINED FOR THE PRODUCTION OF BATTERIES**

(30) Priority: 08.10.2024 IT 202400022362
(71) Applicant: G.D S.p.A., 40133 Bologna (BO) (IT)
(72) Inventor: BIONDI, Andrea, I-40133 Bologna (BO) (IT); CAVAZZA, Luca, I-40133 Bologna (BO) (IT); CAMPAGNOLI, Enrico, I-40133 Bologna (BO) (IT); GANZAROLLI, Antonio, I-40133 Bologna (BO) (IT)
(74) Representative: Porta & Consulenti Associati S.p.A.

(57) **Abstract**

An apparatus (100) for the production of inner assemblies, preferably for electrochemical cells destined for the production of batteries, comprising: a feeding unit (110) configured to feed at least one web (N1; N2; N3; N4) along a feed path (P1; P2; P3; P4); a movable frame (120), movable between a proximal position and a distal position, the proximal position being closer to said feeding unit (110) than the distal position; at least one winding device (130) mounted on said movable frame (120) and configured to wind said at least one web (N1; N2; N3; N4) around a winding support (135) to form an inner assembly (1); a holding member (150) mounted on said movable frame (120), movable between a holding configuration, wherein said holding member (150) is configured to hold said inner assembly (1) wound on said winding support (135), and a disengagement configuration wherein said holding member (150) is configured not to hold said inner assembly (1) wound on said winding support (135); an extraction mechanism (140) configured to extract said winding support (135) from said inner assembly (1) at least partially while said holding member (150) holds said inner assembly (1).

## Description

The present invention relates to an apparatus for the production of inner assemblies, a method thereof for the production of inner assemblies and to a method for the production of inner assemblies for electrochemical cells destined for the production of batteries.

Within the scope of the present description and in the appended claims, "inner assembly" means an object formed by at least one web, or more webs superimposed on each other, wound around a winding support to form a reel.

The present invention finds a preferred, although not exclusive, application in the field of the production of electrochemical cells, for example of a cylindrical or prismatic type, for the realization of which an inner assembly with a superimposed layers structure and wound in the form of a reel is produced.

Cylindrical electrochemical cells, and certain types of prismatic electrochemical cells, are formed by two electrode webs (positive electrode and negative electrode, respectively) and two separator webs, superimposed on each other in an alternated manner, so that one of the two separator webs is interposed between the two electrode webs, and wound around a winding support to form an inner assembly for electrolytic cells. Each electrode web is composed of a conductive sheet coated respectively in a positive electrode active material or in a negative electrode active material. Each separator web is instead composed of a layer of dielectric material.

The inner assembly may have various conformations depending on the conformation of the winding support around which the webs are wound. A winding support generally shaped like a pin leads to the creation of an inner assembly with substantially circular section, for example for the creation of cylindrical electrochemical cells. A winding support shaped like a plate leads to the formation of an inner assembly with elongated or crushed section, for example elliptical, for the creation of prismatic electrochemical cells.

To form the inner assembly, a plurality of webs are supplied from a feeding unit, for example by unwinding them from respective parent reels, coupled by superimposing them on each other, wound on a winding support, and then the wound web is cut to form the inner assembly. The webs can be superimposed upstream of the winding support and supplied to the winding support as a single multilayer web or supplied individually to the winding support and coupled during winding.

After the formation of the inner assembly, any finishing operations, known per se, can be carried out. For example, each wound web has a free flap that can be fixed, for example by applying an adhesive patch. Subsequently, the winding support is extracted to release the inner assembly.

Document JP7284471B1 shows a prior art example of a sheet material winding device.

The Applicant, in the context of the constant need to increase the performance and the efficiency of production processes, has preliminarily observed how the speed of advancement of the webs relative to the winding support can constitute an important element of limitation to the production capacity. This limitation is even more critical in the event that high precision is required in the formation of the inner assembly. In particular, the Applicant has noted that in many applications, such as for example in the production of electrochemical cells, high precision in the geometry of the windings must be ensured in order to ensure the required performance of the finished product.

The Applicant has noted that any interruptions and resumption of the advancement of the at least one web produce unwanted reductions in production efficiency and increased wear of the moving parts which are subjected to increased acceleration and deceleration in order to try to compensate for these negative variations in productivity.

The Applicant has therefore found that arranging one or more winding supports on a movable frame, moving towards the feeding unit during the winding of the webs, and moving away from the feeding unit when the winding is stopped, for example for cutting the webs, allows the webs to be supplied with a substantially constant speed from the feeding unit, thus allowing the production efficiency to be increased.

The Applicant has observed that in order to be able to implement production cycles of inner assemblies that follow one another, it is necessary to remove the inner assembly made during a production cycle from the winding support, so that the winding support is made available for a new production cycle.

The Applicant has noted that the removal of the inner assembly from the winding support should be carried out without compromising the production efficiency of the apparatus.

The Applicant has perceived that, if it were possible to remove the inner assembly from the winding support without compromising or substantially modifying the motion followed by the movable frame during the winding of the webs, it would be possible to make the winding support available for a new production cycle without compromising the production efficiency of the apparatus.

The Applicant has found that, by holding the inner assembly while the movable frame is moving, and by removing the winding support from the inner assembly while the inner assembly is held, the winding support would be made available for a new production cycle without compromising the production efficiency of the apparatus.

The present invention therefore relates, in a first aspect thereof, to an apparatus for the production of inner assemblies, preferably for electrochemical cells destined for the production of batteries.

Preferably, there is provided a feeding unit configured to feed at least one web along a feed path.

Preferably, there is provided a movable frame, movable between a proximal position and a distal position.

Preferably, the proximal position is closer to said feeding unit than the distal position.

Preferably, there is provided at least one winding device mounted on said movable frame.

Preferably, said winding device is configured to wind said at least one web around a winding support to form an inner assembly.

Preferably, there is provided a holding member mounted on said movable frame.

Preferably, said holding member is movable between a holding configuration and a disengagement configuration.

Preferably, in the holding configuration said holding member is configured to hold said inner assembly wound on said winding support.

Preferably, in the disengagement configuration said holding member is configured not to hold said inner assembly wound on said winding support.

Preferably, there is provided an extraction mechanism configured to extract said winding support from said inner assembly at least partially while said holding member holds said inner assembly.

In a second aspect thereof, the present invention relates to a method for the production of inner assemblies, preferably for electrochemical cells destined for the production of batteries.

Preferably, it is provided to feed at least one web from a feeding unit along a feed path.

Preferably, it is provided to move a movable frame between a distal position and a proximal position.

Preferably, the proximal position is closer to the feeding unit than the distal position.

Preferably, it is provided to wind said at least one web around a winding support mounted on said movable frame to form an inner assembly.

Preferably, moving said movable frame between the distal position towards and the proximal position is carried out while said at least one web is wound around said winding support.

Preferably, it is provided to hold said inner assembly.

Preferably, it is provided to extract said winding support from said inner assembly.

Preferably, extracting said winding support from said inner assembly is implemented at least partially during said moving said movable frame between the proximal position and the distal position.

Preferably, extracting said winding support from said inner assembly is implemented during said holding said inner assembly.

In a third aspect thereof, the present invention relates to a method for the production of inner assemblies for electrochemical cells destined for the production of batteries.

Preferably, it is provided to feed a plurality of webs comprising a first electrode web, a second electrode web and two separator webs along respective feed paths.

Preferably, it is provided to move a movable frame between a distal position and a proximal position, the proximal position being closer to the feeding unit than the distal position, while plurality of webs is wound around a winding support mounted on said movable frame to form an inner assembly for electrochemical cells destined for the production of batteries.

Preferably, it is provided to hold said inner assembly.

Preferably, it is provided to extract said winding support from said inner assembly.

Preferably, extracting said winding support from said inner assembly is implemented at least partially during said moving said movable frame between the proximal position and the distal position and during said holding said inner assembly.

Moving the movable frame while feeding the at least one web allows to change the feed speed of the at least one web relative to the winding support without substantially changing the speed of the web in the feeding unit.

Holding the inner assembly allows the winding support to be extracted without the winding support dragging along with it by friction the at least one web wound on it.

Holding the inner assembly and removing the winding support while the movable frame is moving avoids stopping the movable frame specifically to release the inner assembly.

By arranging the holding member on the movable frame, the holding member can hold the inner assembly by moving at the same speed as the inner assembly between the proximal position and the distal position.

The movable frame is movable between the proximal position and the distal position. The proximal position and the distal position are spaced apart along a longitudinal direction. Terms such as "longitudinal", "longitudinally" and the like are used with reference to directions parallel to the longitudinal direction or to amounts measured parallel to the longitudinal direction.

By "first longitudinal direction" is meant a direct longitudinal direction from the proximal position to the distal position.

By "second longitudinal direction" is meant a longitudinal direction directed from the distal position to the proximal position.

In order to wind the at least one web around the winding support, the winding device is configured to rotate the winding support around a winding axis oriented along a transverse direction. The transverse direction is perpendicular to the longitudinal direction.

Terms such as "transverse", "transversely" and the like are used with reference to directions parallel to the transverse direction or to amounts measured parallel to the transverse direction.

By the term "web" is meant an object having a first dimension of thickness, a second dimension of width of at least one order of amount, preferably at least two orders of amount, greater than the first dimension, and a third dimension of length of at least one order of amount, preferably at least two orders of amount, greater than the second dimension. Such an object is flexible at least in the third length dimension so that it can be wound around a winding support. A web can be made from a single sheet of material or from a plurality of sheets previously superimposed and coupled together.

The present invention may have, the first and/or the second and/or the third aspect, at least one of the preferred features described below. Such features may be present individually or in combination with each other, unless expressly stated otherwise, both in the apparatus and in the methods of the present invention.

Preferably, the feeding unit is configured to feed a plurality of webs along respective feed paths.

Preferably, the feeding unit is configured to feed four webs along respective feed paths.

Preferably, feeding at least one web from a feeding unit along a feed path comprises feeding a plurality of webs along respective feed paths, preferably four webs.

Preferably, said plurality of webs comprises a first electrode web, a second electrode web and two separator webs.

In an alternative embodiment, said at least one web is a multilayer web composed of a plurality of superimposed layers.

Preferably, said plurality of layers comprises a first electrode layer, a second electrode layer and two separator layers.

Preferably, said feeding unit is configured to feed said webs on said winding support superimposed on each other.

Preferably, feeding said plurality of webs comprises feeding said webs on said winding support superimposed on each other.

Preferably, said feeding unit is configured to feed said webs on said winding support with the two separator webs alternated to the two electrode webs.

Preferably, feeding said plurality of webs comprises feeding said webs on said winding support with the two separator webs alternated to the two electrode webs.

Preferably, there is provided a fixed frame.

Preferably, said feeding unit is mounted fixed on said fixed frame.

Preferably, said movable frame is movable relative to said fixed frame between the proximal position and the distal position.

Preferably, said movable frame is slidably movable relative to said fixed frame between the proximal position and the distal position.

Preferably, said movable frame is movable in the longitudinal direction between the proximal position and the distal position.

Preferably, said movable frame is movable in a first longitudinal direction from the proximal position to the distal position.

Preferably, moving said movable frame from the distal position towards the proximal position comprises moving said movable frame in a first longitudinal direction.

Preferably, said movable frame is movable for at least a stretch from the proximal position to the distal position with a speed substantially equal to a feed speed of said at least one web.

Preferably, said movable frame is movable in a second longitudinal direction from the distal position to the proximal position.

Preferably, it is provided to move said movable frame from the distal position towards the proximal position.

Preferably, moving said movable frame from the distal position towards the proximal position comprises moving said movable frame in a second longitudinal direction.

Preferably, said second longitudinal direction is opposite to the first longitudinal direction.

Preferably, said at least one web is supplied along said feed path by moving said web in a direction having a direct component as the first longitudinal direction.

Preferably, each web is supplied along said feed path by moving said web in a direction having a direct component as the first longitudinal direction.

Preferably said movable frame is movable between the proximal position and the distal position in an alternated manner in the first longitudinal direction and in the second longitudinal direction.

Preferably it is provided to move said movable frame between the proximal position and the distal position in an alternated manner in the first longitudinal direction and in the second longitudinal direction.

Preferably, it is provided to reverse a direction of movement of the movable frame at the proximal position.

Preferably, it is provided to stop said movable frame at the proximal position for a time interval which is substantially null.

Preferably, it is provided to reverse a direction of movement of the movable frame at the distal position.

Preferably, it is provided to stop said movable frame at the distal position for a time interval which is substantially null.

Preferably, said winding support comprises a first pin extended in a transverse direction.

Preferably, said winding support comprises a second pin extended in the transverse direction.

Preferably, it is provided to arrange one end of said at least one web at an interface between the first pin and the second pin.

Preferably, in order to wind said at least one web, said winding support is rotated around a winding axis.

Preferably, said winding axis is transverse.

Preferably, in order to extract said winding support from said inner assembly, at least the first pin is moved in a transverse direction.

Preferably, in order to extract said winding support from said inner assembly, the first pin and subsequently the second pin are moved in a transverse direction.

Preferably, said extraction mechanism is configured to move in a transverse direction the first pin and the second pin independently of each other.

Preferably, extracting said winding support from said inner assembly comprises moving in a transverse direction first the first pin and subsequently the second pin.

Preferably, said movable frame is configured to move from the distal position towards the proximal position while winding said at least one web around the winding support.

Preferably, it is provided to move said movable frame from the distal position towards the proximal position while winding said at least one web around the winding support.

Preferably the extraction mechanism is configured to extract said winding support from said inner assembly while the movable frame moves in the first longitudinal direction towards the distal position and/or while the movable frame is substantially at the distal position and/or while the movable frame moves in the second longitudinal direction towards the proximal position.

Preferably, the extraction mechanism is configured to start extracting said winding support from said inner assembly when the movable frame is moving from the proximal position to the distal position at a distance from the distal position lower than 70% of the distance between the distal position and the proximal position, preferably lower than 40%, more preferably lower than 30%.

Preferably the extraction mechanism is configured to complete the extraction of said winding support from said inner assembly when said movable frame is substantially at said distal position.

Preferably the extraction mechanism is configured to complete the extraction of said winding support from said inner assembly when the movable frame is at a distance from the distal position lower than 30% of the distance between the distal position and the proximal position, preferably lower than 20%, more preferably lower than 10%.

Preferably it is provided to extract said winding support from said inner assembly while the movable frame moves in the first longitudinal direction and/or while the movable frame is at the distal position and/or while the movable frame moves from the distal position towards the proximal position.

Preferably, it is provided to start extracting said winding support from said inner assembly when the movable frame is moving from the proximal position to the distal position at a distance from the distal position lower than 70% of the distance between the distal position and the proximal position, preferably lower than 40%, more preferably lower than 30%.

Preferably extracting said winding support from said inner assembly comprises completing the extraction of said winding support from said inner assembly when said movable frame is substantially at said distal position.

Preferably it is provided to complete the extraction of said winding support from said inner assembly when the movable frame is at a distance from the distal position lower than 30% of the distance between the distal position and the proximal position, preferably lower than 20%, more preferably lower than 10%.

Preferably, the holding member is clamp-shaped.

Preferably, holding said inner assembly comprises clamping said inner assembly.

Preferably, holding said inner assembly is carried out by means of said holding member.

Preferably, holding said inner assembly comprises moving said holding member from the disengagement configuration to the holding configuration.

Preferably, said holding member comprises a first arm hinged to said movable frame and comprising a respective gripping portion.

Preferably, said holding member comprises a second arm hinged to said movable frame and comprising a respective gripping portion.

Preferably, at least one of the first arm and the second arm is rotatable to move the holding member from the disengagement configuration to the holding configuration by bringing the respective gripping portions closer to each other.

Preferably, both the first arm and the second arm are rotatable to move the holding member from the disengagement configuration to the holding configuration.

Preferably, at least one of the first arm and the second arm is rotatable to move the holding member from the holding configuration to the disengagement configuration by moving the respective gripping portions away from each other.

Preferably, both the first arm and the second arm are rotatable to move the holding member from the holding configuration to the disengagement configuration.

Preferably, holding said inner assembly comprises bringing respective gripping portions of said holding member closer to each other until contacting an outer surface of said inner assembly.

Preferably, bringing said respective gripping portions closer to each other comprises rotating a first arm comprising one of said gripping portions and/or rotating a second arm comprising the other of said gripping portions.

Preferably, rotating said first arm and rotating said second arm comprise rotating said first arm and second arm in opposite directions to each other.

Preferably, said first arm is rotatable about a first rotation axis.

Preferably, said first arm comprises a radial portion extended radially relative to said first rotation axis.

Preferably, said first arm comprises a transverse portion extended transversely.

Preferably, said first arm comprises an arcuate portion extended circumferentially relative to said first rotation axis.

Preferably said first arm extends from a first end to a second end.

Preferably said first arm is hinged to said movable frame at the first end.

Preferably, said radial portion extends from said first end.

Preferably the gripping portion of the first arm is placed at the second end.

Preferably said arcuate portion extends from the second end.

Preferably said transverse portion extends from the radial portion to the arcuate portion.

Preferably, said second arm is rotatable about a second rotation axis.

Preferably, said second arm comprises a radial portion extended radially relative to said second rotation axis.

Preferably, said second arm comprises a transverse portion extended transversely.

Preferably, said second arm comprises an arcuate portion extended circumferentially relative to said second rotation axis.

Preferably said second arm extends from a first end to a second end.

Preferably said second arm is hinged to said movable frame at the first end.

Preferably, said radial portion extends from said first end.

Preferably the gripping portion of the second arm is placed at the second end.

Preferably said arcuate portion extends from the second end.

Preferably said transverse portion extends from the radial portion to the arcuate portion.

Preferably, said gripping portions comprise a countershaped concave surface and an outer surface of said inner assembly.

Preferably, holding said inner assembly is started while said movable frame moves from the proximal position towards the distal position.

Preferably, holding said inner assembly is initiated while said movable frame moves from the proximal position towards the distal position.

Preferably, extracting said winding support from said inner assembly is started while said movable frame moves from the proximal position towards the distal position.

Preferably, it is provided to release said inner assembly.

Preferably, releasing said inner assembly comprises moving said holding member from the holding configuration to the disengagement configuration.

Preferably, it is provided to release said inner assembly from said holding member.

Preferably, it is provided to release said inner assembly while said movable frame moves from the distal position towards the proximal position.

In one embodiment, extracting said winding support from said inner assembly is ended while said movable frame moves from the proximal position towards the distal position.

In one embodiment, extracting said winding support from said inner assembly is ended while said movable frame moves from the proximal position towards the distal position.

In one embodiment, extracting said winding support from said inner assembly is ended while said movable frame moves from the distal position towards the proximal position.

Preferably, releasing said inner assembly is carried out after having completed extracting said winding support from said inner assembly.

Preferably, there is provided a movable support mounted on the movable frame.

Preferably, said at least one winding device is mounted on said movable support.

Preferably, said movable support is configured to move said at least one winding device relative to said movable frame between a winding position and an unloading position.

Preferably, there are provided at least two winding devices mounted on said movable support.

Preferably, there are provided at least three winding devices mounted on said movable support.

Preferably, when one of said winding devices is in the winding position, another of said winding devices is in the unloading position.

Preferably, said movable support is configured to move said at least one winding device relative to said movable frame between a winding position, a finishing position and an unloading position.

Preferably, when one of said winding devices is in the winding position, another of said winding devices is in the finishing position.

Preferably, said at least one winding device is configured to wind said at least one web around the respective winding support in the winding position.

Preferably, said extraction mechanism is configured to extract said winding support from said inner assembly in the unloading position.

Preferably, said holding member is configured to hold said inner assembly in the unloading position.

Preferably, said apparatus is configured to carry out finishing operations on said inner assembly in the finishing position.

Preferably, said apparatus is configured to cut said at least one web in the finishing position.

Preferably, there is provided an unloading member.

Preferably, said unloading member is mounted on said fixed frame.

Preferably, said unloading member is mounted directly on said fixed frame.

Preferably, said unloading member is mounted on said fixed frame independently relative to said movable frame.

Preferably, said unloading member is configured to pick said inner assembly from said holding member.

The unloading device thus allows the inner assembly to be picked without stopping the movable frame.

Preferably, said unloading member comprises a gripping device configured to grab said inner assembly.

Preferably, said gripping device is configured to grab said inner assembly at least partially while said inner assembly is held by said holding member.

Preferably, said holding member is configured to release the inner assembly after said gripping device has grabbed said inner assembly.

Preferably, said holding member is configured to release the inner assembly after said winding support is extracted from said inner assembly.

Preferably, said holding member is configured to release the inner assembly while said movable frame is moving from the distal position to the proximal position.

Preferably, said holding member is configured to release the inner assembly when the movable frame is at a distance from the distal position lower than 30% of the distance between the distal position and the proximal position, preferably lower than 20%, more preferably lower than 10%, even more preferably lower than 5%.

Preferably, said unloading member is configured to move said gripping device in a synchronized manner with said movable frame.

Preferably, said unloading member is configured to move said gripping device substantially at the same speed and in the same direction as said movable frame while said gripping device grabs said inner assembly and until said holding member releases said inner assembly.

Preferably, said unloading member is configured to move said inner assembly up to a predetermined collection area.

Preferably, it is provided to unload said inner assembly.

Preferably, unloading said inner assembly is carried out by means of said unloading member.

Preferably, unloading said inner assembly comprises picking said inner assembly from said holding member.

Preferably, unloading said inner assembly comprises grabbing said inner assembly with a gripping device.

Preferably, grabbing said inner assembly is carried out while said inner assembly is held by said holding member.

Preferably, releasing the inner assembly is carried out after said gripping device has grabbed said inner assembly.

Preferably, releasing the inner assembly is carried out when the movable frame is at a distance from the distal position lower than 30% of the distance between the distal position and the proximal position, preferably lower than 20%, more preferably lower than 10%, even more preferably lower than 5%.

Preferably, unloading said inner assembly comprises moving said gripping device in a synchronized manner with said movable frame.

Preferably, unloading said inner assembly comprises moving said gripping device substantially at the same speed and in the same direction as said movable frame while said gripping device grabs said inner assembly and until said holding member releases said inner assembly.

Preferably, unloading said inner assembly comprises moving said inner assembly up to a predetermined collection area, spaced from the movable frame.

Additional features and advantages of the invention will be better apparent from the following detailed description of a preferred embodiment thereof, with reference to the appended drawings and provided by way of indicative and non-limiting example, in which:
- figure 1 shows a schematic representation of an apparatus for the production of inner assemblies in accordance with the present invention;
- figures 2 to 6 show a perspective view of an apparatus for the production of inner assemblies in accordance with the present invention in different operating configurations, with some elements removed to highlight others;
- figures 7 to 11 show detailed views of details of the apparatus of figure 1 in different operating configurations.

The representations in the attached figures do not necessarily have to be understood in scale and do not necessarily respect the proportions between the various parts.

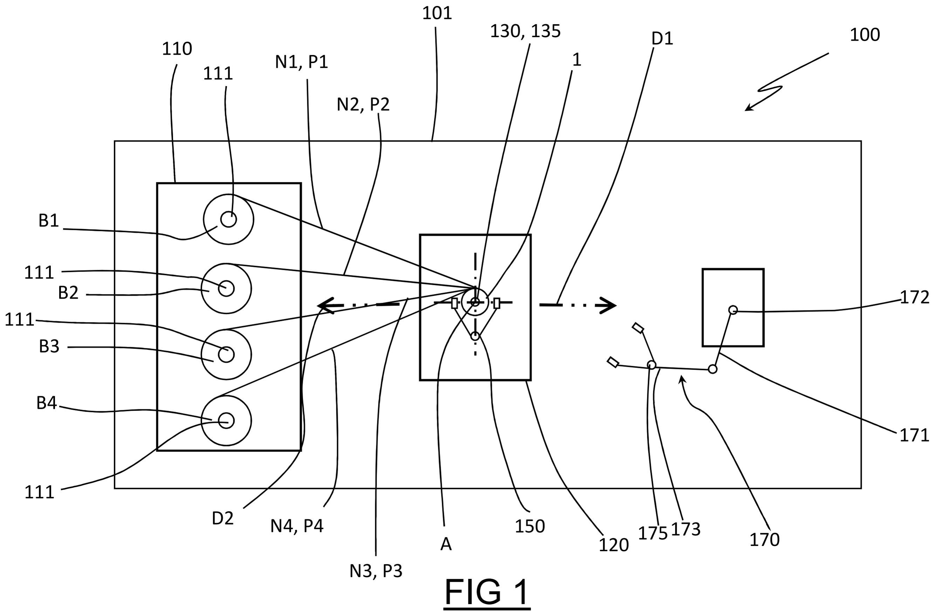

Figure 1 schematically illustrates an apparatus for the production of inner assemblies, generally indicated with reference numeral 100.

The apparatus 100 is destined for the production of inner assemblies 1 composed of at least one wound web. In the preferred example illustrated and described in detail herein, the apparatus 100 is destined for the production of inner assemblies 1 to be used in the manufacture of electrochemical cells. As discussed above, the present invention may, however, find application in inner assemblies of other types, not necessarily destined for the creation of electrochemical cells.

In preferred embodiments, such as that illustrated in figure 1, the assembly 1 is made from a plurality of webs N1, N2, N3, N4. For example, in the case where the inner assembly 1 is used in the context of making an electrochemical cell, the webs may be formed by electrode webs N1, N3 and separator webs N2, N4. These webs N1, N2, N3, N4 are suitably superimposed to realize a layers structure in which a first electrode web (for example precursor of the positive electrode of the electrochemical cell), a first separator web, a second electrode web (for example precursor of the negative electrode of the electrochemical cell) and a second separator web alternate each other. The order between the first electrode web and the second electrode web is provided for exemplary purposes only and a sequence opposite to that previously indicated may also be provided.

The apparatus 100 comprises a feeding unit 110, schematically illustrated in figure 1. The feeding unit 110 is configured to feed the webs N1, N2, N3, N4 along respective feed paths P1, P2, P3, P4. In a preferred embodiment, the feeding unit 110 is mounted fixed on a fixed frame 101 of the apparatus 100.

The webs N1, N2, N3, N4, move along the respective feed paths P1, P2, P3, P4 in respective feed directions having respective longitudinal components directed in the same direction.

In the illustrated example, the feeding unit 110 comprises dispensing devices 111 of the webs N1, N2, N3, N4 which may be reel supports configured to unwind the webs N1, N2, N3, N4 from large reels B1, B2, B3, B4 and subsequently supplied during operation of the apparatus 100. The dispensing devices 111 may further comprise respective actuators (not illustrated) adapted to rotate the reels B1, B2, B3, B4 about respective rotation axes.

Without loss of generality, further processing and/or movement steps of the webs N1, N2, N3, N4 can be provided between unwinding and feed along the respective feed paths P1, P2, P3, P4.

Although the present description and figure 1 refer to the particular case of a feeding unit 110 configured to unwind and feed four webs N1, N2, N3, N4, of a type suitable for the production of electrolytic cells, the feeding unit can be configured to feed even a single web along a respective feed path or a plurality of webs in a number other than four along respective feed paths. In further embodiments, the web or the webs are further not limited to the case of the production of electrolytic cells and may be of different materials than the electrode webs and the separator webs described above.

When in the continuation of the present description, characteristics and components of the apparatus 100 are described with reference to the four webs N1, N2, N3, N4, of the embodiment of figure 1, this characteristic or component can, without loss of generality, be adapted to perform the same function described also in the event that the inner assembly 1 is made from a single web or from a plurality of webs in different numbers.

The apparatus 100 comprises a movable frame 120. The movable frame 120 is movable relative to the feeding unit 110. In particular, the movable frame 120 is slidably mounted relative to the fixed frame 101 of the apparatus 100. The movable frame 120 is movable between a proximal position and a distal position relative to the feeding unit 110. The proximal position and the distal position are longitudinally spaced. In the proximal position, the movable frame 120 is closer to the feeding unit 110 than in the distal position.

In the illustrated preferred embodiment, the movable frame 120 is configured to move between the proximal position and the distal position in a rectilinear manner. The movable frame 120 is configured to move from the proximal position to the distal position and thereafter from the distal position to the proximal position in an alternated manner, preferably substantially without stopping. The movable frame 120 is movable from the proximal position to the distal position in a first longitudinal direction D1 directed away from the feeding unit 110. The longitudinal components of the feed directions of the webs N1, N2, N3, N4 along the respective feed paths P1, P2, P3, P4 are directed in the first longitudinal direction D1. The speed of movement of the movable frame from the proximal position to the distal position is substantially equal to the feed speed of the webs N1, N2, N3, N4.

The movable frame 120 is further movable from the distal position to the proximal position in a second longitudinal direction D2 directed towards the feeding unit 110. The second longitudinal direction D2 is opposite to respective longitudinal components of the feed directions of the webs N1, N2, N3, N4 along the respective feed paths P1, P2, P3, P4.

Sliding guides, not illustrated, may be provided between the movable frame 120 and the fixed frame 101 to guide the sliding of the movable frame 120 relative to the fixed frame. The apparatus 100 may further provide one or more actuators, not illustrated, to move the movable frame 120 between the proximal position and the distal position.

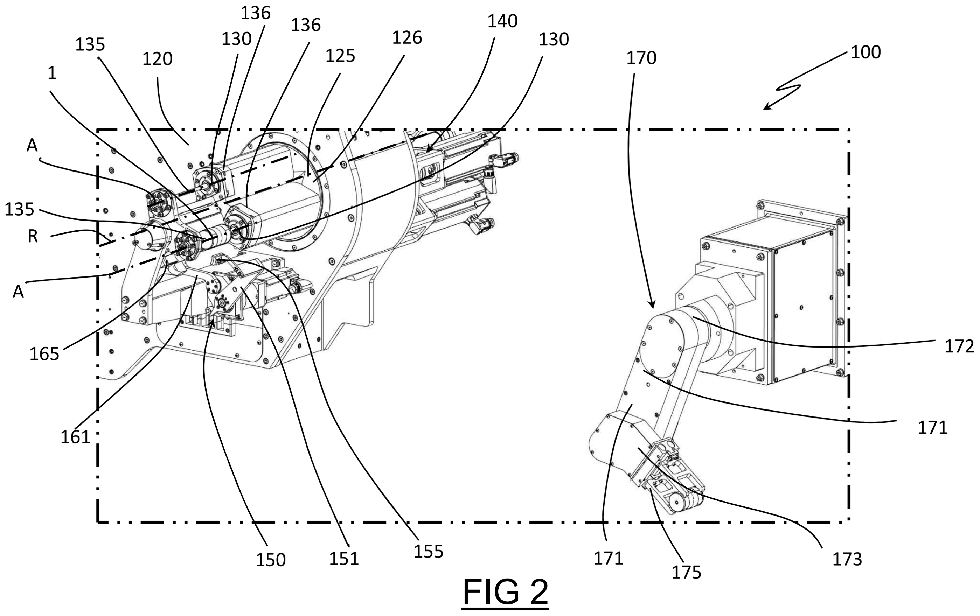

A movable support 125 is mounted on the movable frame 120, the movable support 125 is illustrated in figures 2-6, while it is omitted for the sake of simplicity from figure 1, which is schematic. In the preferred embodiment, the movable support 125 comprises a wheel 126 rotatably mounted on the movable frame 120. The wheel 126 is rotatable about a rotation axis R. The rotation axis R is oriented transversely. An actuator, not illustrated, is provided for rotatably actuating the movable support 125 relative to the movable frame 120.

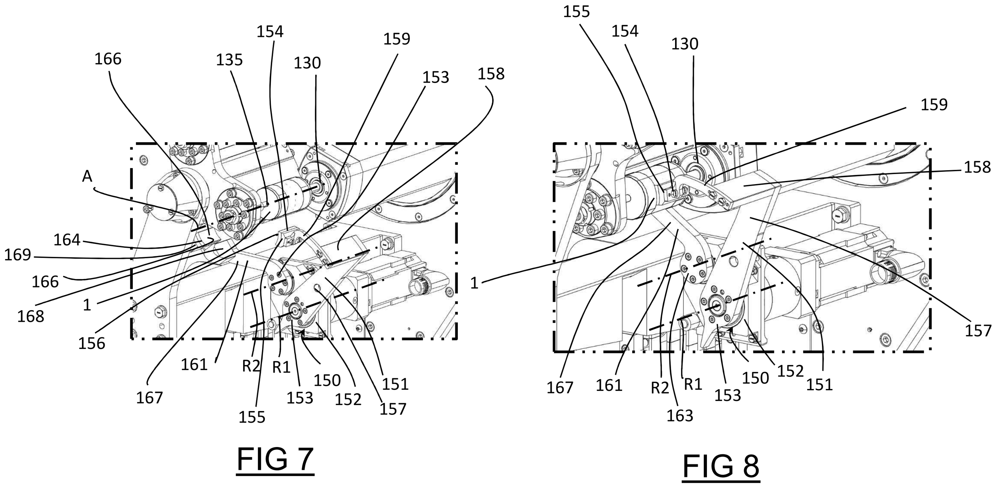

The apparatus 100 comprises at least one winding device 130 mounted on the movable frame 120. Preferably, the apparatus 100 comprises a plurality of winding devices 130. In the embodiment illustrated in figures 2-10, the apparatus 100 comprises three winding devices 130. In embodiments not illustrated, the apparatus 100 may comprise a single winding device 130 or a plurality of winding devices 130 in a number other than three.

Preferably, the winding devices 130 are mounted on the movable support 125. The movable support 125 is configured to move each winding device 130 relative to the movable frame 120 between a winding position, a finishing position, and an unloading portion. In the embodiment illustrated in figures 2-10, the winding position, the finishing position, the unloading portion are placed along a circular trajectory, on the movable frame 120, angularly spaced from each other. Preferably, the winding position, the finishing position, the unloading potion are angularly equidistant from each other.

The movable support 125 is configured to move each winding device 130 in succession from the winding position to the finishing position, from the finishing position to the unloading position, and from the unloading position to the winding position. In the illustrated embodiment, the movable support 125 is configured to maintain each winding device 130 fixed or substantially fixed relative to the movable frame 120 while the movable frame 120 moves from the proximal position to the distal position and while the movable frame 120 moves from the distal position to the proximal position.

In the embodiment illustrated in figures 2-10, the movable support 125 is configured to move each winding device 130 between two successive positions, between the winding position, the finishing position and the unloading portion, while the movable frame 120 is moving from the proximal position to the distal position. Preferably, the movable support 125 is configured to complete the movement of each winding device 130 between two successive positions before the movable frame 120 has arrived at the distal position. In the preferred embodiment, the movable support 125 is configured to move each winding device 130 between two successive positions by rotating a predetermined angle about the rotation axis R. In the illustrated embodiment, the predetermined angle is equal to the angle that distances two successive winding devices 130 from the rotation axis R, for example 120°.

The winding devices 130 are movable relative to the fixed frame 101 along a movement path determined by the resultant of the movement of the movable frame 120 between the distal position and the proximal position and of the support frame 125 between the winding position, the finishing position and the unloading portion.

Each winding device 130 comprises a winding support 135 and a rotating actuator 136 configured to rotate said winding support 135 around a transverse winding axis A.

Each winding support 135 is configured to engage an end of at least one of the webs N1, N2, N3, N4 and to rotate about the winding axis A to wind the webs N1, N2, N3, N4 and form the inner assembly 1.

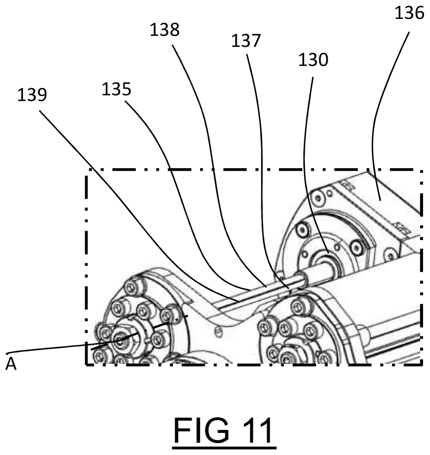

The winding support 135, illustrated in detail in figure 11, comprises a first pin 137 extended transversely and a second pin 138 extended transversely and side by side with the first pin 137. The winding support 135 is configured to engage and hold at least one of the webs N1, N2, N3, N4 at an interface 139 between the first pin 137 and the second pin 138.

An extraction mechanism 140 is configured to extract the winding support 135 from the inner assembly 1 formed around the winding support 135.

The extraction mechanism 140 is configured to transversely move the first pin 137 and the second pin 138 independently of each other. The extraction mechanism 140 is configured to move the first pin 137 and the second pin 138 from a respective operating position to a respective non-operating position. In the operating position the first pin 137 and the second pin 138 are configured to engage at least one of the webs N1, N2, N3, N4, to form the inner assembly 1. In the non-operating position, the first pin 137 and the second pin 138 are configured not to engage the webs N1, N2, N3, N4. Preferably, the winding support 135 has a tapered shape to facilitate the extraction thereof. At least one of the first pin 137 and the second pin 138 has a tapered shape. Preferably, the interface 139 extends along a plane inclined relative to the transverse direction, to facilitate the extraction of the winding support 135. To facilitate the extraction of the winding support 135, the extraction mechanism 140 is configured to start the extraction of the first pin 137 and, subsequently, start the extraction of the second pin 138 after a predetermined time interval.

In embodiments not illustrated, the winding support 135 can have different shapes, known per se. For example, in the case where the apparatus 100 is configured to make prismatic-type electrolytic cells, the winding support 135 may have a plate-like shape. In embodiments not illustrated, the winding support 135 may be monolithic.

The inner assembly 1 is formed, in a manner known per se, around the winding support 135 by rotating the winding support 135 around the winding axis while at least one of the webs N1, N2, N3, N4 is held. The at least one of the held webs is inserted into the interface 139 between the first pin 137 and the second pin 138.

Each winding device 130 is configured to receive the webs N1, N2, N3, N4 in the respective winding position. Feed members, not illustrated, are configured to feed the webs N1, N2, N3, N4 to the winding device 130 in a manner known per se, so that the winding support 135 receives at least one of the webs N1, N2, N3, N4 between the first pin 137 and the second pin 138.

The winding device 130 is configured to wind the webs N1, N2, N3, N4 around the winding support 135 while the movable frame 120 is moving towards the proximal position from the distal position and while the winding device 130 is in the winding position.

As a result of the winding of the webs N1, N2, N3, N4 around the winding support 135, the inner assembly 1 is formed around the winding support 135, still joined to portions of the webs N1, N2, N3, N4 placed along the respective feed paths P1, P2, P3, P4 and coming from the feeding unit 110. The support frame 125 is configured to move the winding device 130 with the inner assembly 1 formed around the respective winding support 135 from the winding position to the finishing position, preferably while the movable frame 120 is moving from the proximal position towards the distal position.

Cutting members, not illustrated, are configured to cut the webs N1, N2, N3, N4 in a manner known per se to separate the inner assembly 1 from the portions of the webs N1, N2, N3, N4 placed along the respective feed paths P1, P2, P3, P4. In the illustrated embodiment, the cutting of the webs N1, N2, N3, N4 occurs when the winding device 130 around which the inner assembly 1 is wound is in the finishing position.

Further finishing members known per se, not illustrated, may be provided to perform finishing operations on the inner assembly 1 while the respective winding device 135 is in finishing position. For example, one end of the web portions composing the inner assembly 1 may be fixed by applying an adhesive patch to the outer surface of the inner assembly 1.

The apparatus 100 is configured to perform cutting and finishing of the inner assembly 1 while the movable frame 120 moves from the proximal position to the distal position and/or thereafter from the distal position to the proximal position.

The winding device 130 with the inner assembly 1 formed around the respective winding support 135, after finishing operations, is movable from the finishing position to the unloading position, preferably while the movable frame 120 is moving from the proximal position towards the distal position.

A holding member 150 is mounted on the movable frame 120. The holding member 150 is configured to hold the inner assembly 1 while the respective winding support 135 is extracted by means of the extraction mechanism 140. In the illustrated embodiment, the holding member 150 is clamp-shaped.

The holding member 150 comprises a first arm 151 hinged to a mounting support 152 mounted fixedly on the movable frame 120. The mounting support 152 is mounted on the movable frame in proximity to the movable support 125. The first arm 151 is rotatable relative to the movable frame 120 about a first transverse rotation axis R1. Preferably, the first arm 151 is made as a single block without joints. The first arm 151 extends from a first end 153 to a second end 154. At the first end 153, the first arm 151 is hinged to the mounting support 152. At the second end 154, the first arm 151 comprises a gripping portion 155 configured to come into contact with the inner assembly 1. The gripping portion 155 comprises a concave surface 156. The concave surface 156 is counter-shaped to a cylindrical outer surface portion of the inner assembly 1.

The first arm 151 comprises a radial portion 157 extended from the first end 153 in a radial direction relative to the first rotation axis R1. The first arm 151 further comprises an arcuate portion 158 extending substantially circumferentially from the gripping portion 155 relative to the first rotation axis R1. The first arm 151 further comprises a transverse portion 159 extending substantially transversely between the arcuate portion 158 and the radial portion 157 to transversely offset the gripping portion 155 from the radial portion 157.

The holding member 150 comprises a second arm 161 hinged to the mounting support 152. The second arm 161 is rotatable relative to the movable frame 120 about a second transverse rotation axis R2. Preferably, the second arm 161 is made as a single block without joints. The second arm 161 extends from a first end 163 to a second end 164. At the first end 163, the second arm 161 is hinged to the mounting support 152, preferably adjacent to the first end 153 of the first arm 151. At the second end 164, the second arm 161 comprises a gripping portion 165 configured to come into contact with the inner assembly 1. The gripping portion 165 comprises a concave surface 166. The concave surface 166 is counter-shaped to a cylindrical outer surface portion of the inner assembly 1. The concave surface 166 of the gripping portion 165 of the second arm 161 faces the concave surface 156 of the gripping portion 155 of the first arm 151.

The second arm 161 comprises a radial portion 167 extended from the first end 163 in a radial direction relative to the second rotation axis R2. The second arm 161 further comprises an arcuate portion 168 extending substantially circumferentially from the gripping portion 165 relative to the second rotation axis R2. The second arm 161 further comprises a transverse portion 169 extending substantially transversely between the arcuate portion 168 and the radial portion 167 to transversely offset the gripping portion 155 from the radial portion 157.

The holding member 150 is movable between a holding configuration and a disengagement configuration. The holding member 150 is movable between the holding configuration and the disengagement configuration by means of a rotation of the first arm 151 about the first rotation axis R1 and a rotation in the opposite direction of the second arm 161 about the second rotation axis R2. In the illustrated embodiment, the first arm 151 rotates clockwise from the holding configuration to the disengagement configuration and counterclockwise from the disengagement configuration to the holding configuration. The second arm 161 rotates counterclockwise from the holding configuration to the disengagement configuration and clockwise from the disengagement configuration to the holding configuration.

In the holding configuration the gripping portion 155 of the first arm 151 and the gripping portion 165 of the second arm 161 are in contact with the inner assembly 1 wound on the winding support 135 of a winding device 130 in the unloading position, at opposite sides of the inner assembly 1. The holding member 150 is configured to press the gripping portions 155, 165 against the inner assembly 1 with a force that is sufficient to hold the inner assembly 1 in a fixed position relative to the movable support 120 while the winding support 135 is extracted from the inner assembly 1.

In the disengagement configuration the gripping portion 155 of the first arm 151 and the gripping portion 165 of the second arm 161 are spaced from each other more than in the holding configuration and are configured not to engage an inner assembly 1 wound on the winding support 135 of a winding device 130 in the unloading position, or movable from the finishing position to the unloading position, so as not to hold it.

The holding member 150 is configured to move in the holding configuration while the movable frame 120 moves from the proximal position towards the distal position, to grab the inner assembly 1 wound around the winding support 135 of the winding device 130 in the unloading position. The extraction mechanism 140 is configured to extract the winding support 135 from the inner assembly 1 while the inner assembly 1 is held by the holding member 150. This may occur before the movable frame 120 reaches the distal position, when the movable frame 120 is at the distal position, or when the movable frame 120 is moving from the distal position towards the proximal position. The extraction of the winding support 135 starts while the movable frame 120 is moving from the proximal position towards the distal position and may end while the movable frame 120 is still moving from the proximal position towards the distal position, while the movable frame is substantially at the distal position or while the movable frame 120 is already moving from the distal position towards the proximal position.

The apparatus 100 comprises an unloading member 170. The unloading member 170 is mounted on the fixed frame 101. The unloading member 170 is mounted on a side opposite to the feeding unit 110 relative to the movable frame 120. The movable frame 120 moves closer to the unloading member 170 by moving from the proximal position to the distal position and moves away from the unloading member 170 by moving from the distal position to the proximal position.

The unloading member 170 comprises an articulated robotic arm 171. The articulated arm 171 extends from a first end 172, at which the articulated arm 171 is mounted fixed to the fixed frame 101, to a second end 173. At the second end 173, the unloading member 170 comprises a gripping device 175. The gripping device 175 is movable in the longitudinal direction by articulation of the articulated arm 171. The unloading member 170 is configured to grab the inner assembly 1 by means of the gripping device 175 while the inner assembly 1 is held by the holding member 150. The holding member 150 is configured to move from the holding configuration to the disengagement configuration after the unloading member 170 has grabbed the inner assembly 1, for example when the movable frame is substantially at the distal position or while the movable frame 120 is moving from the distal position to the proximal position.

The gripping device 175 is configured to grab the inner assembly 1 while the inner assembly 1 is held by the holding member 150. The gripping device 175 is configured to engage portions of the outer surface of the inner assembly not engaged by the gripping portions 155, 165 of the holding member 150. In the illustrated embodiment, the gripping device 175 is configured to engage respective peripheral bands of the outer surface of the inner assembly 1. The gripping portions 155, 165 of the holding member 150 are configured to engage a central band of the outer surface of the inner assembly 1 placed between the peripheral bands.

While the gripping device 175 grabs the inner assembly 1 and before the holding device 150 releases the inner assembly 1, the unloading member 170 is configured to move the gripping device 175 so as to keep it at the inner assembly 1 and moving substantially at the same speed and in the same direction as the inner assembly 1 (and thus moving substantially at the same speed and in the same direction as the movable frame 120). In the illustrated embodiment, this movement is obtained by articulation of the articulated arm 171.

After releasing the inner assembly 1 from the holding member 150, the unloading member 170 is configured to move the inner assembly 1 towards a predetermined unloading region and release the inner assembly 1 in the unloading region.

To produce an inner assembly 1 of the type described above, by means of the apparatus 100, the movable frame 120 is moved from the distal position to the proximal position to perform a first stroke of the movable frame 120. While the movable frame 120 is moving from the distal position to the proximal position, at least one web, preferably a plurality of webs N1, N2, N3, N4, is supplied to the winding support 135. While the movable frame 120 is moving from the distal position to the proximal position, the plurality of webs N1, N2, N3, N4 are wound around the winding support 135, causing the winding support 135 to rotate around the winding axis A. Once the winding is ended, the rotation of the winding support 135 is stopped.

Subsequently, the movable frame 120 is moved from the proximal position to the distal position to perform a second stroke of the movable frame 120. Preferably, the stop time of the movable frame 120 in the proximal position is substantially zero.

During the second stroke, the webs N1, N2, N3, N4 are cut, so as to separate the web portions wound around the winding support 135 to form the inner assembly 1 from the web portions along the feed paths P1, P2, P3, P4.

Subsequently, the movable frame 120 is moved from the distal position to the proximal position to perform a third stroke of the movable frame 120 similar to the first stroke. Preferably, the stop time of the movable frame 120 in the distal position is substantially zero.

While the movable frame 120 is moving from the proximal position to the distal position, the winding device 130 around whose winding support 135 the webs N1, N2, N3, N4 have been wound during the first stroke is moved from the winding position to the finishing position. This movement is preferably concluded before the arrival of the movable frame 120 in the distal position.

During the third stroke of the movable frame 120, the webs N1, N2, N3, N4 are wound on a further winding support 135 to start the production of a further inner assembly (not illustrated), the production of which is carried out in a manner similar to that described for the inner assembly 1. The production of the further inner assembly takes place partially simultaneously with respect to that described of the inner assembly 1, temporally offset by the time necessary for the movable frame 120 to perform a stroke from the proximal position to the distal position and from the distal position to the proximal position.

During the second and/or third stroke of the movable frame 120, finishing operations are carried out on the inner assembly 1 wound around the winding support 135 of the winding device 130 in the finishing position.

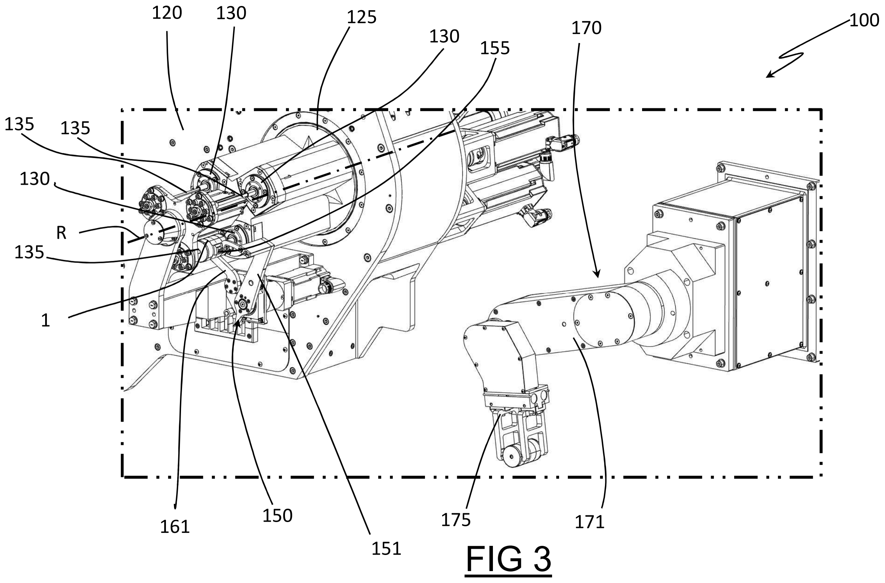

Subsequently, the movable frame 120 is moved from the proximal position to the distal position to perform a fourth stroke of the movable frame 120, illustrated in figures 2 to 4. During the fourth stroke, the assembly 1 is grabbed by means of the holding member 150 and held by the holding member 150. To hold the inner assembly 1, the holding member 150 moves from the disengagement configuration to the holding configuration, as illustrated in figures 3, 7 and 8.

While the movable frame 120 is moving from the proximal position to the distal position, the winding device 130 around whose winding support 135 the webs N1, N2, N3, N4 have been wound during the first stroke is moved from the finishing position to the unloading position, as illustrated in figures 2, 7 and 8. This movement is preferably concluded before the arrival of the movable frame 120 in the distal position and takes place in a manner similar to that described above from the winding position to the finishing position.

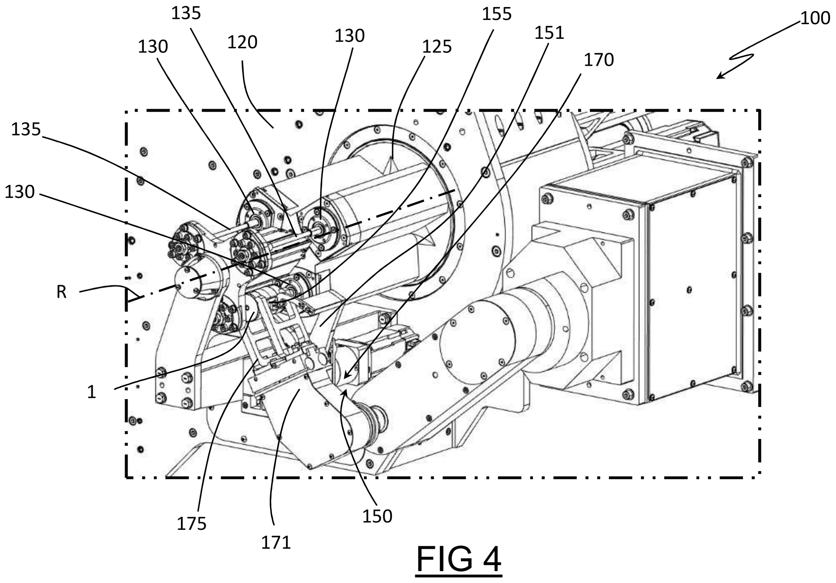

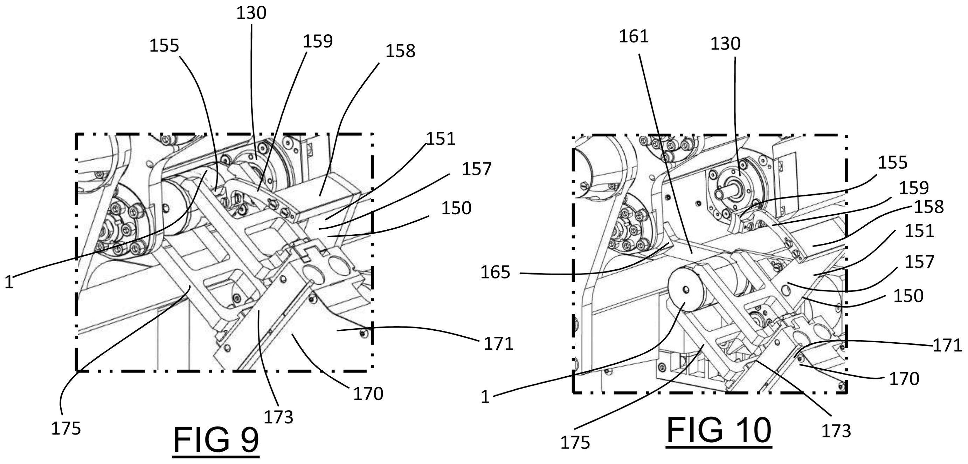

While the movable frame 120 is moving from the proximal position to the distal position and while the assembly 1 is held by the holding member 150, the winding support 135 is extracted from the inner assembly 1, as illustrated in figures 4 and 9.

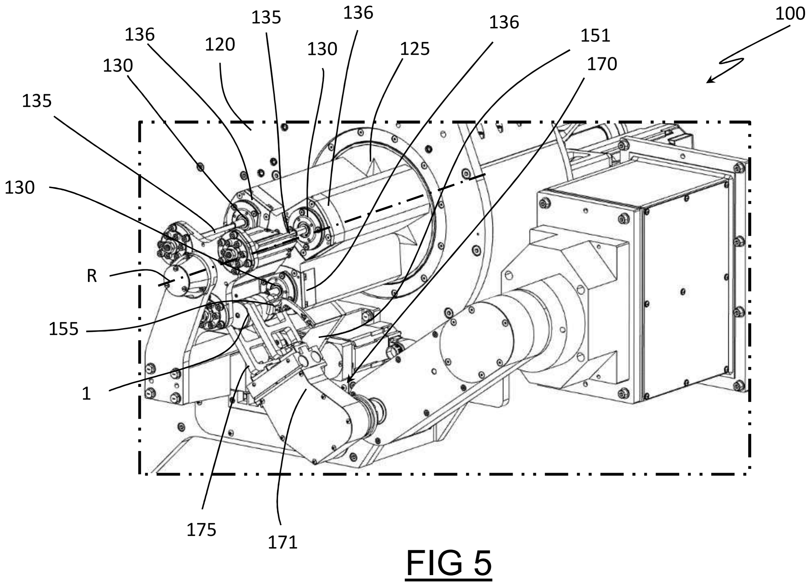

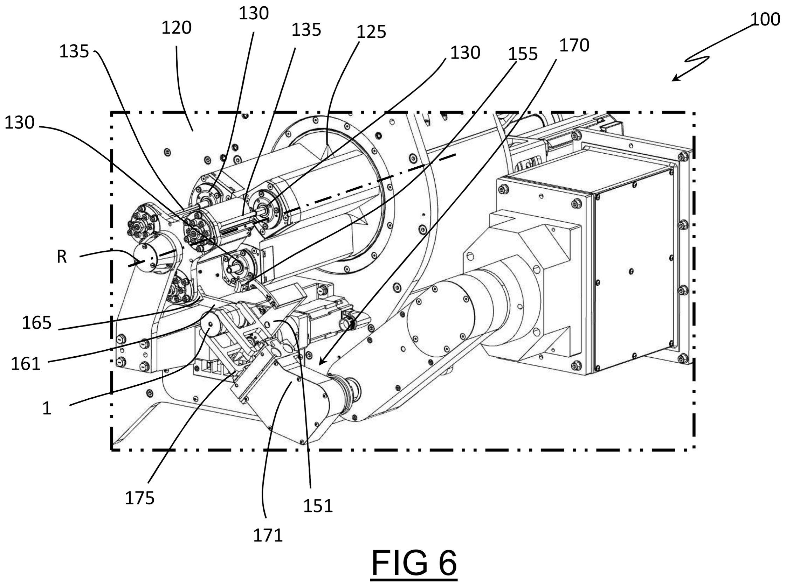

Subsequently, the movable frame 120 is moved from the distal position to the proximal position to perform a fifth stroke of the movable frame 120, similar to the first and third strokes, as illustrated in figures 5 and 6. Preferably, the stop time of the movable frame 120 in the distal position is substantially zero. The extraction of the winding support 135 from the inner assembly 1 may end before the end of the fourth stroke, substantially at or near the distal position, or at the beginning of the fifth stroke.

While the inner assembly 1 is held by the holding member 150, the inner assembly 1 is grabbed by means of the unloading member 170, as illustrated in figures 5 and 9. This may occur before the end of the fourth stroke. The inner assembly 1 is grabbed by means of the gripping device 175. To grab the inner assembly 1, the gripping device 175 is brought at the inner assembly 1 and the gripping device 175 is kept at the inner assembly 1 for the time necessary for gripping. To keep the gripping device 175 at the inner assembly 1, the gripping device is moved substantially at the same speed and in the same direction as the inner assembly 1 (and therefore of the movable frame 120) by means of the articulated arm 171.

After the winding support 135 is extracted from the inner assembly 1, and after the gripping device 175 has grabbed the inner assembly 1, the inner assembly 1 is released from the holding member 150, as illustrated in figures 6 and 10. To release the inner assembly 1 from the holding member 150, the holding member 150 is moved from the holding configuration to the disengagement configuration , preferably during the fifth stroke of the movable frame 120.

After the inner assembly 1 is released from the holding member 150, the inner assembly 1 held by the gripping device 175 is moved up to the unloading region by means of the unloading member 170 and the inner assembly 1 is released by the gripping device 175.

## Claims

1. Apparatus (100) for the production of inner assemblies, preferably for electrochemical cells destined for the production of batteries, comprising:
a feeding unit (110) configured to feed at least one web (N1; N2; N3; N4) along a feed path (P1; P2; P3; P4);
a movable frame (120), movable between a proximal position and a distal position, the proximal position being closer to said feeding unit (110) than the distal position;
at least one winding device (130) mounted on said movable frame (120) and configured to wind said at least one web (N1; N2; N3; N4) around a winding support (135) to form an inner assembly (1);
a holding member (150) mounted on said movable frame (120), movable between a holding configuration, wherein said holding member (150) is configured to hold said inner assembly (1) wound on said winding support (135), and a disengagement configuration wherein said holding member (150) is configured not to hold said inner assembly (1) wound on said winding support (135);
an extraction mechanism (140) configured to extract said winding support (135) from said inner assembly (1) at least partially while said holding member (150) holds said inner assembly (1).

2. Apparatus (100) according to claim 1, wherein:
said holding member (150) comprises a first arm (151) hinged to said movable frame (120) and comprising a respective gripping portion (155) and a second arm (161) hinged to said movable frame (120) and comprising a respective gripping portion (165), wherein:
at least one of the first arm (151) and the second arm (161) is rotatable to move the holding member (150) from the disengagement configuration to the holding configuration by bringing the respective gripping portions (155, 165) closer to each other;
said at least one of the first arm (151) and the second arm (161) is rotatable to move the holding member (150) from the holding configuration to the disengagement configuration by moving the respective gripping portions (155, 165) away from each other.

3. Apparatus (100) according to claim 1 or 2, further comprising an unloading member (170) mounted on a fixed frame (101), said movable frame (120) being movable between the proximal position and the distal position relative to said fixed frame (101), wherein said unloading member (170) is configured to pick said inner assembly (1) from said holding member (150).

4. Apparatus (100) according to claim 3, wherein:
said unloading member (170) comprises a gripping device (175) configured to grab said inner assembly (1) at least partially while said inner assembly (1) is held by said holding member (150);
said holding member (150) is configured to release said inner assembly (1) after said gripping device (175) has grabbed said inner assembly (1).

5. Apparatus (100) according to claim 4, wherein said unloading member (170) is configured to move said gripping device (175) substantially at the same speed and in the same direction as said movable frame (120) while said gripping device (175) grabs said inner assembly (1) and until said holding member (150) releases said inner assembly (1).

6. Apparatus (100) according to any one of the preceding claims, wherein said winding support (135) comprises at least one first pin (137) extended in a transverse direction (A) and said extraction mechanism (140) is configured to move said at least one first pin (137) in a transverse direction.

7. Apparatus (100) according to any one of the preceding claims, wherein the extraction mechanism (140) is configured to start extracting said winding support (135) from said inner assembly (1) when the movable frame (120) moves from the proximal position to the distal position at a distance from the distal position lower than 70% of the distance between the distal position and the proximal position, preferably lower than 40%, more preferably lower than 30%.

8. Apparatus (100) according to any one of the preceding claims, comprising a movable support (125) mounted on the movable frame (120), said at least one winding device (130) being mounted on said movable support (125);
wherein said movable support (125) is configured to move said at least one winding device (130) relative to said movable frame (120) between a winding position and an unloading position;
wherein said at least one winding device (130) is configured to wind said at least one web (N1; N2; N3; N4) around the respective winding support (135) in the winding position of the respective winding device (130);
wherein said extraction mechanism (140) is configured to extract said winding support (135) from said inner assembly (1) in the unloading position of the respective winding device (130); and
wherein said holding device (150) is configured to hold said inner assembly (1) in the unloading position of the respective winding device (130).

9. Method for the production of inner assemblies, preferably for electrochemical cells destined for the production of batteries, comprising:
feeding at least one web (N1; N2; N3; N4) from a feeding unit (110) along a feed path (P1; P2; P3; P4);
moving a movable frame (120) between a distal position and a proximal position, the proximal position being closer to the feeding unit (110) than the distal position, while said at least one web (N1; N2; N3; N4) is wound around a winding support (135) mounted on said movable frame (120) to form an inner assembly (1);
holding said inner assembly (1);
extracting said winding support (135) from said inner assembly (1), wherein extracting said winding support (135) from said inner assembly (1) is implemented at least partially during said moving said movable frame (120) between the proximal position and the distal position and during said holding said inner assembly (1).

10. Method according to claim 9, wherein holding said inner assembly (1) and extracting said winding support (135) from said inner assembly (1) are implemented at least partially while said movable frame (120) moves from the proximal position towards the distal position.

11. Method according to claim 9 or 10, wherein holding said inner assembly (1) is implemented by means of a holding member (150) mounted on said movable frame (120).

12. Method according to claim 11, comprising unloading said inner assembly (1), wherein unloading said inner assembly (1) comprises grabbing said inner assembly (1) by means of a gripping device (175) and subsequently releasing said inner assembly (1) from said holding member (150).

13. Method according to claim 12, wherein releasing said inner assembly from said holding member (150) is implemented while said movable frame (120) moves from the distal position towards the proximal position.

14. Method for the production of inner assemblies for electrochemical cells destined for the production of batteries, comprising:
feeding a plurality of webs (N1, N2, N3, N4) comprising a first electrode web (N1), a second electrode web (N3) and two separator webs (N2, N4) along respective feed paths (P1, P2, P3, P4);
moving a movable frame (120) between a distal position and a proximal position, the proximal position being closer to the feeding unit (110) than the distal position, while plurality of webs (N1, N2, N3, N4) is wound around a winding support (135) mounted on said movable frame (120) to form an inner assembly (1) for electrochemical cells destined for the production of batteries;
holding said inner assembly (1);
extracting said winding support (135) from said inner assembly (1), wherein extracting said winding support (135) from said inner assembly (1) is implemented at least partially during said moving said movable frame (120) between the proximal position and the distal position and during said holding said inner assembly (1).
